(19) Europäisches Patentamt
European Patent Office
Office européen des brevets

(11) **EP 2 346 327 B1**

(12) **EUROPEAN PATENT SPECIFICATION**

(45) Date of publication and mention
of the grant of the patent:
**13.01.2016 Bulletin 2016/02**

(21) Application number: **09793225.5**

(22) Date of filing: **01.10.2009**

(51) Int Cl.:
*A01N 35/02* (2006.01)    *A01N 43/76* (2006.01)
*A01P 1/00* (2006.01)    *A01N 59/00* (2006.01)
*C02F 3/28* (2006.01)    *C02F 1/68* (2006.01)
*C02F 103/14* (2006.01)    *C02F 103/42* (2006.01)

(86) International application number:
**PCT/US2009/059176**

(87) International publication number:
**WO 2010/039923 (08.04.2010 Gazette 2010/14)**

(54) **BIOCIDAL COMPOSITIONS AND METHODS OF USE**

BIOZIDE ZUSAMMENSETZUNGEN UND VERWENDUNGSVERFAHREN

COMPOSITIONS BIOCIDES ET MÉTHODES D'UTILISATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **01.10.2008 US 243028**

(43) Date of publication of application:
**27.07.2011 Bulletin 2011/30**

(73) Proprietor: **Dow Global Technologies LLC
Midland, MI 48674 (US)**

(72) Inventor: **YIN, Bei
Buffalo Grove
IL 60089 (US)**

(74) Representative: **Beck Greener
Fulwood House
12 Fulwood Place
London WC1V 6HR (GB)**

(56) References cited:
**EP-A1- 0 385 801    WO-A2-2006/100042
US-A- 4 135 945**

- **"Bioban CS-1135", INTERNET CITATION, 10
October 2002 (2002-10-10), pages 1-http://ww,
XP002545999, [retrieved on 2009-09-16]**
- **"BIOBAN CS-1246", 1 January 2002 (2002-01-01),
20020101, XP002513771, the whole document**

## Description

Field of the Invention

The invention relates to biocidal compositions and methods of their use for the control of microorganisms in aqueous and water containing systems.

Background of the Invention

Protecting water-containing systems from microbial contamination is critical to the success of many production processes, especially oil or natural gas production operations. In oil and gas production, microorganism contamination from both aerobic and anaerobic bacteria can cause serious problems such as reservoir souring (mainly caused by anaerobic sulfate-reducing bacteria (SRB)), microbiologically influenced corrosion (MIC) on metal surfaces of equipment and pipelines, and degradation of polymer additives.

Microbial contamination can occur anywhere throughout oil and gas operations including in injection water, produced water, downhole, near bore areas, in deaeration towers, in transmission pipelines, in oil and gas storage tanks, and in functional water-based fluids such as drilling muds, completion or workover fluids, stimulation fluids, and fracturing fluids.

Biocide treatments are essential and used for disinfecting and preserving aqueous systems in oil and gas applications. However not all biocides are effective over a wide range of microorganisms and/or temperatures. In oil and gas applications, the high temperature (up to 120 °C or higher) and presence of $H_2S$ in down hole environments become big and unique challenges for biocide treatments.

WO 2006/100042 discloses dispersions containing dialdehydes and formaldehyde cleavers for stabilizing aqueous suspensions. A number of formaldehyde cleavers are disclosed, including oxazolidines.

EP 0 385 801 discloses biocidal compositions containing phosphonium salts and aldehydes.

Glutaraldehyde is a fast acting biocide and is one of the main biocides used for oil/gas field injection and produced water / fluids treatment. However, it is not stable under certain conditions such as high temperature (e.g. 80 °C and above). And therefore, cannot provide long term microbial control for a downhole environment. As a result, there is a need for thermally stable, fast acting, and long lasting biocides for oil and gas applications, including for down-hole treatment for anaerobic SRB control.

## BRIEF SUMMARY OF THE INVENTION

The invention provides a method for controlling microorganisms in aqueous or water containing systems for oil and/or gas production. The method comprises treating the system with biocidal compositions comprising glutaraldehyde together with an oxazolidine biocidal compound, wherein the oxazolidine is 4,4-dimethyloxazolidine or 7-ethylbicyclooxazolidine.

## DETAILED DESCRIPTION OF THE INVENTION

As noted above, the invention provides methods of using biocidal compositions in the control of microorganisms. The compositions suitable for the method of the invention comprise glutaraldehyde together with a biocidal oxazolidine compound. It has surprisingly been discovered that the combination of glutaraldehyde and an oxazolidine are synergistic when used for microorganism control in aqueous or water containing media. That is, the combined materials result in improved biocidal properties than would otherwise be expected based on their individual performance at the particular use-concentration. The observed synergy permits reduced amounts of the materials to be used to achieve acceptable biocidal properties, thus potentially reducing environmental impact and materials cost.

In addition to exhibiting synergy, the compositions as used in the method of the invention are also effective for controlling a wide range of microorganism types, including both aerobic and anaerobic microorganisms. Further, the compositions are functional at both low and high temperature and for extended time periods. They also maintain their efficacy in sulfide containing environments, such as those containing sulfide ion. As a result of these attributes, the compositions are particularly useful in the oil and natural gas industry. In these industries, biocidal agents are needed that are capable of controlling both aerobic and anaerobic microorganisms over varying temperature ranges, and that continue to be effective even when sulfides are present.

For the purposes of this specification, the meaning of "microorganism" includes, but is not limited to, bacteria, fungi, algae, and virus. Preferred microorganisms against which the compositions are effective are bacteria, and more preferably, SRB. The words "control" and "controlling" should be broadly construed to include within their meaning, and without being limited thereto, inhibiting the growth or propagation of micro-organisms, killing microorganisms, disinfection, and/or preservation against re-growth.

Suitable oxazolidine compounds for use in the invention include 4,4-dimethyloxazolidine (available from The Dow Chemical Company) and 7-ethylbicyclooxazolidine (5-ethyl-1-aza-3,7-dioxabicyclo[3.3.0]octane) (available from The Dow Chemical Company)

Of course, more than one oxazolidine compound can be combined for use in the present invention; in such cases, ratios and concentrations are calculated using the total weight of all oxazolidine compounds.

Preferably, the glutaraldehyde:oxazolidine weight ratio in the compositions of the invention is between about 50:1 to 1:50, more preferably 30:1 to 1:30, and even more preferably 20:1 to 1:20.

In some preferred embodiments, the weight ratio of glutaraldehyde to oxazolidine compound is between about 30:1 and about 1:50, more preferably between about 20:1 and about 1:30, even more preferably between about 10:1 and about 1:20. In further embodiments, the weight ratio is between about 10:1 and about 1:15 or between about 6:1 and about 1:15 or between about 6:1 and about 1:9. The embodiments of this paragraph are especially preferred where the oxazolidine is 4,4-dimethyloxazolidine. These embodiments are also preferred when the microorganism being controlled is anaerobic, such as SRB. These embodiments are also preferred where biocidal activity is needed at elevated temperature.

In further preferred embodiments, particularly suited for use against aerobic bacteria, the weight ratio of glutaraldehyde to oxazolidine compound is between about 1:6 and about 1:15. This embodiment is also preferred where the oxazolidine is 4,4-dimethyloxazolidine.

In still other preferred embodiments, the weight ratio of glutaraldehyde to oxazolidine compound is between about 30:1 and about 1:30, more preferably between about 20:1 and about 1:20. The embodiments of this paragraph are especially preferred where the oxazolidine is 7-ethylbicyclooxazolidine. These embodiments are also preferred when the microorganism being controlled is anaerobic, such as SRB.

In yet further preferred embodiments, particularly suited for use against aerobic bacteria, the weight ratio of glutaraldehyde to oxazolidine compound is between 1:6 and 1:8. This embodiment is also preferred where the oxazolidine is 7-ethylbicyclooxazolidine.

The compositions as used in the method of the invention are useful for controlling both aerobic and anaerobic microorganisms in oil and natural gas applications. In some embodiments, the compositions are preferably used against anaerobic microorganisms (preferably against anaerobic bacteria).

The compositions as used in the method of the invention are suitable for use over a wide temperature range. In some further preferred embodiments, the compositions are used in aqueous or water containing systems at a temperature of 37 °C or greater, more preferably 60 °C or greater, and even more preferably 80 °C or greater. The compositions are further effective when a source of sulfide (e.g., hydrogen sulfide) is present in the aqueous or water containing system.

Examples of oil and natural gas systems where the compositions can be used include, for instance, oil and gas field injection and produced water and functional fluids, oil and gas wells, oil and gas operation, separation, storage, and transportation systems, oil and gas pipelines, oil and gas vessels, and fuel.

The blends may also be used for controlling microorganisms in other industrial water and water containing/contaminated matrixes, such as cooling water, boiler water, pulp and paper mill water, other industrial process water, ballast water, wastewater, metalworking fluids, latex, paint, coatings, adhesives, inks, tape joint compounds, personal care and household products, or a system used therewith. In addition, the blends may be employed in other areas where Glutaraldehyde is used as a biocide and reduced loadings are desired.

A person of ordinary skill in the art can readily determine, without undue experimentation, the concentration of the composition that should be used in any particular application. By way of illustration, in some embodiments for oil and gas injection, it is preferred that active concentrations of the composition ranging from about 10 to about 500 ppm by weight, preferably about 30 to about 300 ppm, are used for top side treatment (where the temperature is usually low and aerobic bacteria are likely prevalent), and active concentrations of from about 30 to about 1000 ppm, preferably about 50 to about 500 ppm, for downhole treatment (where the temperature is usually high and anaerobic bacterial are more likely prevalent).

The components of the composition can be added to the aqueous or water containing system separately, or preblended prior to addition. A person of ordinary skill in the art can readily determine the appropriate method of addition. The composition can be added to the system with other additives such as, but not limited to, surfactants, ionic/nonionic polymers and scale, corrosion inhibitors, oxygen scavengers. Additional biocides may also be added, such as quaternary ammonium compounds, tetrakis(hydroxymethyl)phosphonium salts and tris hydroxymethyl phosphine, 2,2-Dibromo-3-nitrilopropionamide (DBNPA), 2-Bromo-2-nitropropane-1,3-diol (Bronopol), 5-chloro-2-methyl-4-isothiazolin-3-one, 2-methyl-4-isothiazolin-3-one (CMIT/MIT), 2-methyl-4-isothiazolin-3-one, Tris(hydroxmethyl) nitromethane, 1-(3-chloroallyl)-3,5,7,-triaza-1-azonia-adamantane chloride, 1,2-benzisothiazolin-3-one, o-phthalaldehyde, formaldehyde, triazine, 2,6-dimethyl-m-dioxan-4-ol acetate, oxidants such as chlorine, chlorine dioxide, peroxides, peracetic acid, ammonium bromide, sodium bromide, sodium hypochlorite, sodium hypobromite, 1-bromo-3-chloro-5,5-dimethylhydantoin (BCDMH), chloramine.

The following examples are illustrative of the invention but are not intended to limit its scope.

EXAMPLES

The synergy indexes reported in the following examples are calculated using the following equation:

$$\text{Synergy Index} = \text{Ca}/\text{CA} + \text{Cb}/\text{CB}$$

where Ca: Concentration of biocide A required to achieve a certain level or complete bacterial kill when used in combination;
CA: Concentration of biocide A required to achieve a certain level or complete bacterial kill when used alone;
Cb: Concentration of biocide B required to achieve a certain level or complete bacterial kill when used in combination; and
CB: Concentration of biocide B required to achieve a certain level or complete bacterial kill when used alone.

A synergy index (SI) of 1 indicates additivity, a synergy index of less than 1 indicates synergy, and a synergy index greater than 1 indicates antagonism.

Various methods known to those skilled in the art can be used for evaluating biocidal efficacy. In some of the examples below, a serial dilution technique is used, which determines viable bacteria remaining after a treatment regimen. The method is based or adapted (e.g., for high temperature testing or for the presence of sulfide) from the methodology described in inventor's pending international application PCT/US08/075755, filed September 10, 2008, which is incorporated herein by reference.

Example 1.

Synergy of glutaraldehyde/oxazolidine against aerobic bacteria

A sterile NaCl solution (0.85%) is contaminated with bacterial inoculums at final bacterial concentration of approximately $10^6$ CFU/ml. Then, biocide solution (single or in combination) is added into the bacterial suspension at various concentrations and immediately mixed well. After the mixtures are incubated at 37 °C for 1 hour, the viable bacteria left in the solution are determined. Bacterial log reduction is then calculated. Table 1 below compares the dosages required to achieve 3 log bacterial reduction when glutaraldehyde and 4,4-dimethyl-oxazolidine are used alone and in combination at active weight ratio of 1:6.

Table 1. Biocidal efficacy of glutaraldehyde, 4,4-dimethyl-oxazolidine and their combination

| Bacteria | Concentration required to achieve 3 log bacterial reduction in 1 hour (ppm, active) | | | | Synergy index |
|---|---|---|---|---|---|
| | Used alone | | Used in combination | | |
| | Glutaraldehyde | 4,4-dimethyl-oxazolidine | Glutaraldehyde | 4,4-dimethyl-oxazolidine | |
| *Pseudomonas aeruginosa* ATCC 10145 | 44.5 | 296.6 | 18.6 | 111.3 | 0.79 |
| *Staphylococcus aureus* ATCC 6538 | 44.5 | 296.6 | 18.6 | 111.3 | 0.79 |
| *Enterobacter aerogenes* ATCC 13048 | 44.5 | 296.6 | 18.6 | 111.3 | 0.79 |
| *Klebsiella pneumoniae* ATCC 8308 | 44.5 | 197.8 | 12.4 | 74.2 | 0.65 |
| *Escherichia coli* ATCC 11229 | 44.5 | 197.8 | 18.6 | 111.3 | 0.98 |
| *Salmonella choleraesius* ATCC 10708 | 44.5 | 197.8 | 18.6 | 111.3 | 0.98 |
| *Pseudomonas putida* ATCC 49128 | 44.5 | 296.6 | 18.6 | 111.3 | 0.79 |
| *Bacillus subtillus* ATCC 8473 | 44.5 | 296.6 | 18.6 | 111.3 | 0.79 |

As shown in the table 1, glutaraldehyde in combination with 4,4-dimethyl-oxazolidine shows a high synergistic effect and much lower dosages are therefore needed for good bacterial control when the biocides are used in combination instead of separately.

Using the same test evaluation, other ratios of the glutaraldehyde / 4,4-dimethyl-oxazolidine combination are tested. The synergy indexes of the biocidal efficacy of these combinations against *Pseudomonas aeruginosa* ATCC 10145 are summarized in Table 2.

Table 2. Synergy index of glutaraldehyde / 4,4-dimethyl-oxazolidine combination's efficacy against *Pseudomonas aeruginosa* ATCC 10145 at different ratios.

| Active weight ratio of glutaraldehyde to 4,4-dimethyl-oxazolidine | Synergy Index |
| --- | --- |
| 2:1 | 1.53 |
| 1:1 | 1.05 |
| 1:2 | 1.08 |
| 1:4 | 1.14 |
| 1:6 | 0.79 |
| 1:8 | 0.81 |
| 1:10 | 0.83 |
| 1:15 | 0.87 |
| 1:20 | 1.33 |

The combinations of glutaraldehyde with 7-ethyl-bicyclooxazolidine are also tested. Table 3 compares the dosages required to achieve 3 log bacterial reduction when glutaraldehyde and 7-ethyl-bicyclooxazolidine are used alone and in combination at active weight ratio of 1:6.

Table 3. Biocidal efficacy of glutaraldehyde, 7-ethyl-bicyclooxazolidine and their combination

| Bacteria | Concentration required to achieve 3 log bacterial reduction in 1 hour (ppm, active) | | | | Synergy index* |
| --- | --- | --- | --- | --- | --- |
| | Used alone | | Used in combination | | |
| | Glutaraldehyde | 7-ethyl-bicyclooxazolidine | Glutaraldehyde | 7-ethyl-bicyclooxazolidine | |
| *Pseudomonas aeruginosa* ATCC 10145 | 44.5 | 296.6 | 18.6 | 111.3 | 0.79 |
| *Staphylococcus aureus* ATCC 6538 | 44.5 | 296.6 | 18.6 | 111.3 | 0.79 |
| *Enterobacter aerogenes* ATCC 13048 | 44.5 | 296.6 | 18.6 | 111.3 | 0.79 |
| *Klebsiella pneumoniae* ATCC 8308 | 44.5 | 197.8 | 12.4 | 74.2 | 0.65 |
| *Escherichia coli* ATCC 11229 | 44.5 | 296.6 | 12.4 | 74.2 | 0.53 |
| *Salmonella choleraesius* ATCC 10708 | 44.5 | 296.6 | 18.6 | 111.3 | 0.79 |
| *Pseudomonas putida* ATCC 49128 | 44.5 | 296.6 | 18.6 | 111.3 | 0.79 |
| *Bacillus subtillus* ATCC 8473 | 44.5 | 296.6 | 12.4 | 74.2 | 0.53 |

The synergy indexes of the biocidal efficacy of other glutaraldehyde / 7-ethyl-bicyclooxazolidine combinations against *Pseudomonas aeruginosa* ATCC 10145 are summarized in Table 4.

Table 4. Synergy index of glutaraldehyde / 7-ethyl-bicyclooxazolidine combination's efficacy against *Pseudomonas aeruginosa* ATCC 10145 at different ratios.

| Active weight ratio of glutaraldehyde to 7-ethyl-bicyclooxazolidine | Synergy Index |
|---|---|
| 2:1 | 1.02 |
| 1:1 | 1.05 |
| 1:2 | 1.08 |
| 1:4 | 1.14 |
| 1:6 | 0.79 |
| 1:8 | 0.82 |
| 1:10 | 1.25 |
| 1:15 | 1.30 |
| 1:20 | 1.33 |

Example 2.

Synergy of glutaraldehyde/oxazolidine against anaerobic bacteria

Inside an anaerobic chamber (Bactron III), a deaerated sterile salt solution (3.1183 g of NaCl, 1.3082 mg of NaHCO$_3$, 47.70 mg of KCl, 72.00 mg of CaCl$_2$, 54.49 mg of MgSO$_4$, 172.28 mg of Na2SO$_4$, 43.92 mg of Na$_2$CO$_3$ in 1 L water) is contaminated with an oil field isolated anaerobic SRB consortium at final bacterial concentrations of about $10^7$ CFU/mL. The aliquots of this bacterial suspension are then treated with glutaraldehyde, oxazolidine biocides (4,4-dimethyl-oxazolidine or 7-ethyl-bicyclooxazolidine in this case) or the glutaraldehyde/ oxazolidine combinations at different active concentrations. After the mixtures are incubated at 40 °C for 1 hour, the viable bacteria left in the mixture are determined using a serial dilution method. Bacterial log reduction is then calculated. Table 5 compares the dosages required to achieve complete bacterial kill when glutaraldehyde and 4,4-dimethyl-oxazolidine are used alone and in combination.

Table 5. Biocidal efficacy of glutaraldehyde, 4,4-dimethyl-oxazolidine and their combination against SRB

| Concentration required for complete bacterial kill in 1 hour (ppm, active) | | | | Synergy index |
|---|---|---|---|---|
| Used alone | | Used in combination | | |
| *Glutaraldehyde* | *4,4-dimethyl-oxazolidine* | *Glutaraldehyde* | *4,4-dimethyl-oxazolidine* | |
| 26.3 | >1600.0 | 13.2 | 2.4 | <0.50 |
| | | 11.9 | 5.9 | <0.46 |
| | | 17.8 | 15.8 | <0.69 |
| | | 10.5 | 21.1 | <0.41 |
| | | 10.5 | 39.5 | <0.42 |
| | | 5.3 | 43.9 | <0.23 |

As can be seen from Table 5, high synergistic effects of the Glutaraldehyde/ 4,4-dimethyl-oxazolidine combinations are demonstrated in this test. The biocidal efficacy of glutaraldehyde, 7-ethyl-bicyclooxazolidine and their combination at various active weight ratios are summarized in Table 6. The data in Table 6 show a high synergistic effect of glutaraldehyde / 7-ethyl-bicyclooxazolidine combination against anaerobic SRB.

Table 6. Biocidal efficacy of glutaraldehyde, 7-ethyl-bicyclooxazolidine and their combination against SRB

| Concentration required for 3 log bacterial kill in 2 hours (ppm, active) | | | | | Synergy index |
|---|---|---|---|---|---|
| Used alone | | Used in combination | | | |
| *Glutaraldehyde* | *7-ethyl-bicyclooxazolidine* | *weight ratio* | *Glutaraldehyde* | *7-ethyl-bicyclooxazolidine* | |
| 8.9 | >2025 | 20:1 | 5.9 | 0.3 | <0.67 |
| | | 10:1 | 5.9 | 0.6 | <0.67 |
| | | 5:1 | 5.9 | 1.2 | <0.67 |
| | | 2:1 | 8.9 | 4.4 | <1.00 |
| | | 1:1 | 5.9 | 5.9 | <0.67 |
| | | 1:2 | 5.9 | 11.9 | <0.67 |
| | | 1:5 | 5.9 | 29.6 | <0.68 |
| | | 1:10 | 4.0 | 39.5 | <0.46 |
| | | 1:20 | 2.6 | 52.7 | <0.32 |

Example 3.

Synergy of glutaraldehyde/oxazolidine against anaerobic bacteria at elevated temperature

In this example, the biocidal effectiveness of glutaraldehyde, oxazolidine, and their combinations are evaluated at 80 °C over 5 days. The biocides are challenged with $10^5$ CFU/mL of oilfield SRB consortium in the presence of 10 ppm sulfide. The biocide solutions are re-challenged with the SRB consortium and sulfide at day 3 and 4. Table 7 shows the synergy index results for the 5 day test. The results in Table 7 reveal that the glutaraldehyde / 4,4-dimethyl-oxazolidine combination is synergistic at 80 °C, with SRB and sulfide challenge.

Table 7. Synergy index of glutaraldehyde / 4,4-dimethyl-oxazolidine combination for high temperature and sulfide environment application

| Active weight ratio (Glutaraldehyde : 4,4-dimethyl-oxazolidine) | Synergy index | | | |
|---|---|---|---|---|
| | 2hr | 3 days | 4 days | 5 days |
| 5.5:1 | <0.5 | 0.2 | 0.2 | <0.1 |
| 2:1 | 0.5 | 0.2 | 0.1 | <0.1 |
| 1:1.1 | 0.5 | 0.2 | 0.1 | <0.1 |
| 1:2 | 0.4 | 0.1 | 0.1 | <0.1 |
| 1:3.8 | 0.4 | 0.2 | <0.1 | <0.1 |
| 1:8.3 | 1.1 | 0.4 | <0.1 | <0.1 |

The application is intended to cover such departures from the present disclosure as come within the known or customary practice in the art to which this invention pertains and which fall within the limits of the following claims.

**Claims**

1.  A method for controlling microorganisms in an aqueous or water containing system for oil and/or gas production, the method comprising treating the system with a composition comprising:

    glutaraldehyde; and
    an oxazolidine biocidal compound, wherein the oxazolidine is 4,4-dimethyloxazolidine or 7-ethylbicyclooxazolidine.

2. A method according to claim 1 wherein the weight ratio of glutaraldehyde to 4,4-dimethyloxazolidine is between 6:1 and 1:15 or the weight ratio of glutaraldehyde to 7-ethylbicyclooxazolidine oxazolidine biocidal compound is between 20:1 and 1:20.

3. A method according to claim 1 or claim 2, wherein the aqueous or water containing system contains sulfides.

4. A method according to any one of claims 1 to 3, wherein oil and gas production comprises oil and gas field injection and produced water and functional fluids, oil and gas wells, oil and gas operation, separation, storage, and transportation systems, oil and gas pipelines, oil and gas vessels, or fuel.

5. A method according to any one of claims 1 to 3 wherein the microorganisms are anaerobic bacteria.

6. A method according to any one of claims 1 to 3 wherein the aqueous or water containing system is at 37 °C or above.

**Patentansprüche**

1. Ein Verfahren zum Kontrollieren von Mikroorganismen in einem wässrigen oder wasserhaltigen System zur Öl- und/oder Gasförderung, wobei das Verfahren das Behandeln des Systems mit einer Zusammensetzung beinhaltet, die Folgendes beinhaltet:

   Glutaraldehyd; und
   eine biozide Oxazolidinverbindung, wobei das Oxazolidin 4,4-Dimethyloxazolidin oder 7-Ethylbicyclooxazolidin ist.

2. Verfahren gemäß Anspruch 1, wobei das Gewichtsverhältnis von Glutaraldehyd zu 4,4-Dimethyloxazolidin zwischen 6 : 1 und 1 : 15 beträgt oder das Gewichtsverhältnis von Glutaraldehyd zu der bioziden 7-Ethylbicyclooxazolidin-Oxazolidinverbindung zwischen 20 : 1 und 1 : 20 beträgt.

3. Verfahren gemäß Anspruch 1 oder Anspruch 2, wobei das wässrige oder wasserhaltige System Sulfide enthält.

4. Verfahren gemäß einem der Ansprüche 1 bis 3, wobei die Öl- und Gasförderung Folgendes beinhaltet: Öl- und Gasfeldeinpress- und -förderwasser und funktionelle Fluide, Öl- und Gasbohrlöcher, Öl- und Gasförderbetrieb, Trennungs-, Lagerungs- und Transportsysteme, Öl- und Gasrohrleitungen, Öl- und Gastanker oder Brennstoff.

5. Verfahren gemäß einem der Ansprüche 1 bis 3, wobei die Mikroorganismen anaerobe Bakterien sind.

6. Verfahren gemäß einem der Ansprüche 1 bis 3, wobei das wässrige oder wasserhaltige System 37 °C oder mehr aufweist.

**Revendications**

1. Une méthode pour contrôler des microorganismes dans un système aqueux ou contenant de l'eau pour la production pétrolière et/ou gazière, la méthode comprenant le fait de traiter le système avec une composition comprenant :

   du glutaraldéhyde ; et
   un composé biocide d'oxazolidine, l'oxazolidine étant la 4,4-diméthyloxazolidine ou la 7-éthylbicyclooxazolidine.

2. Une méthode selon la revendication 1 dans laquelle le rapport en poids du glutaraldéhyde à la 4,4-diméthyloxazolidine est compris entre 6/1 et 1/15 ou le rapport en poids du glutaraldéhyde au composé biocide d'oxazolidine 7-éthylbicyclooxazolidine est compris entre 20/1 et 1/20.

3. Une méthode selon la revendication 1 ou la revendication 2, dans laquelle le système aqueux ou contenant de l'eau contient des sulfures.

4. Une méthode selon n'importe laquelle des revendications 1 à 3, dans laquelle la production pétrolière et gazière comprend de l'eau injectée et produite de champs de pétrole et de gaz et des fluides fonctionnels, des puits de pétrole et de gaz, une exploitation pétrolière et gazière, des systèmes de séparation, de stockage et de transport, des oléoducs et des gazoducs, des navires pétroliers et gaziers, ou du combustible.

5. Une méthode selon n'importe laquelle des revendications 1 à 3 dans laquelle les microorganismes sont des bactéries anaérobies.

6. Une méthode selon n'importe laquelle des revendications 1 à 3 dans laquelle le système aqueux ou contenant de l'eau est à 37 °C ou plus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006100042 A
- EP 0385801 A
- US 08075755 W